(19) **Europäisches Patentamt / European Patent Office / Office européen des brevets**

(11) **EP 4 640 873 A1**

(12) **EUROPEAN PATENT APPLICATION**
published in accordance with Art. 153(4) EPC

(43) Date of publication:
**29.10.2025 Bulletin 2025/44**

(21) Application number: **23907461.0**

(22) Date of filing: **24.11.2023**

(51) International Patent Classification (IPC):
**C22C 38/02** (2006.01)   **C22C 38/04** (2006.01)
**C22C 38/06** (2006.01)   **C22C 38/00** (2006.01)
**C22C 38/14** (2006.01)   **C22C 38/16** (2006.01)
**C22C 38/08** (2006.01)   **C22C 38/12** (2006.01)
**C21D 8/12** (2006.01)

(52) Cooperative Patent Classification (CPC):
**C21D 8/12; C21D 9/46; C22C 38/00; C22C 38/02;
C22C 38/04; C22C 38/06; C22C 38/08;
C22C 38/12; C22C 38/14; C22C 38/16; H01F 1/147**

(86) International application number:
**PCT/KR2023/019129**

(87) International publication number:
**WO 2024/136175 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220181162**

(71) Applicant: POSCO Co., Ltd
**Pohang-si, Gyeongsangbuk-do 37859 (KR)**

(72) Inventors:
• **PARK, June-Soo**
  **Pohang-si, Gyeongsangbuk-do 37877 (KR)**
• **JOO, Hyung-Don**
  **Pohang-si, Gyeongsangbuk-do 37877 (KR)**
• **HONG, Jae-Wan**
  **Gwangyang-si, Jeollanam-do 57807 (KR)**
• **SONG, Dae-Hyun**
  **Pohang-si, Gyeongsangbuk-do 37877 (KR)**

(74) Representative: **Meissner Bolte Partnerschaft
mbB
Patentanwälte Rechtsanwälte
Postfach 86 06 24
81633 München (DE)**

(54) **NON-ORIENTED ELECTRICAL STEEL SHEET AND MANUFACTURING METHOD THEREFOR**

(57)   Provided are a non-oriented electrical steel sheet and a manufacturing method therefor. The electrical steel sheet of the present invention comprises, by weight%, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, and Ti: 0.0050% or less, the balance being Fe and inevitable impurities, wherein Al, Si, and Mn satisfy relation expression 1, and the steel sheet's texture is formed to satisfy relation formula 3.

EP 4 640 873 A1

**Description**

Technical Field

The present disclosure relates to a method for manufacturing a non-oriented electrical steel sheet, which may be mainly used as a material for an iron core for a rotating machine such as a motor, a generator, or the like, and a material for an iron core for a stationary machine such as a small transformer or the like, and more specifically, to a non-oriented electrical steel sheet having excellent high-frequency iron loss that may be manufactured by optimally controlling components of steel and optimizing manufacturing conditions to improve a texture.

Background Art

Recently, with the strengthening of environmentally friendly policies worldwide, demand for improved efficiency of motors or generators, which may be energy conversion devices converting electrical energy into mechanical energy or mechanical energy into electrical energy, is increasing. Since non-oriented electrical steel sheets may be materials to be used as a material for an iron core, in a rotating machine such as a motor, a generator, or the like, and a stationary machine such as a small transformer or the like, to have a significant effect on efficiency, demand for improved efficiency of the motor or the generator is leading to demand for improved characteristics of the non-oriented electrical steel sheets.

Representative magnetic characteristics of non-oriented electrical steel sheets may be iron loss and magnetic flux density. As iron loss decreases, iron loss to occur during a process of magnetizing an iron core may be reduced to improve efficiency. As magnetic flux density increases, a higher magnetic field may be induced with the same energy, and since less current is applied to obtain the same magnetic flux density, energy efficiency may be improved. Meanwhile, recently, in terms of iron loss, high-frequency iron loss has emerged as a more important characteristic than commercial frequency (50Hz) iron loss. As a rotation speed of the motor increases, high-frequency iron loss may have a greater effect on efficiency than commercial frequency iron loss. Therefore, as a representative example, in non-oriented electrical steel sheets used in driving motors for eco-friendly vehicles or the like, high-frequency iron loss of 400Hz may be evaluated as a more important characteristic. Therefore, when the recent energy efficiency improvement policy and the utilization direction of non-oriented electrical steel sheets are reflected, it may be said that the development technology of non-oriented electrical steel sheets with low high-frequency iron loss, high magnetic flux density, and excellent magnetism is essential.

As the most basic and effective method of reducing iron loss among important characteristics of non-oriented electrical steel sheets, there may be a method of increasing addition amounts of Si, Al, and Mn, which may be elements with high resistivity, or a method of decreasing a thickness of a steel sheet. An increase in addition amounts of Si, Al, and Mn may increase resistivity of steel, which reduces eddy current loss among iron loss of the non-oriented electrical steel sheets, to have an effect of reducing iron loss, and, in high-frequency iron loss, may thus be a very effective method for reducing high-frequency iron loss, since a proportion of eddy current loss among the iron loss may increase. However, since the effect may be changed depending on an addition ratio, and the magnetic flux density may deteriorate as amounts of alloying element increases, in order to secure excellent iron loss and magnetic flux density, an appropriate addition amount, and an addition ratio between addition amounts of Si, Al, and Mn should be appropriately controlled. The method of decreasing a thickness of the steel sheet may be also a method of greatly reducing the eddy current loss, and may be very effective in reducing iron loss, but may have disadvantages of low productivity and workability for the steel sheet with a thin thickness. However, from a recent energy efficiency perspective, the need for more thin products is increasing, and it may be expected that product development will continue in a direction of decreasing a thickness in the future.

Technologies of improving magnetic properties by utilizing special additive elements such as REM or the like to improve a texture, or of introducing additional manufacturing processes such as warm rolling, double rolling, double annealing, or the like, as a method of improving magnetic flux density while lowering iron loss of non-oriented electrical steel sheets, may be also being reported. However, since all of these technologies may lead to an increase in manufacturing raw material costs or may be difficult to mass-produce, it may be said that development of technologies that may be both excellent in magnetism and easy to produce commercially is necessary. In addition, technologies are being developed to suppress and control formation of inclusions by strictly limiting amounts of impurities added and adding elements such as Ca or the like, but may also lead to an increase in manufacturing raw material costs and may not be easy to clearly secure effects thereof.

There have been continuous efforts to solve these problems, and many technologies have been developed. Among the prior art technologies for non-oriented electrical steel sheets, Patent Document 1 proposes a method for improving magnetism through improvement of a texture by setting a composition weight ratio of MnO and $SiO_2$ ($MnO/SiO_2$) in oxide inclusions in steel to 0.43 or less, performing finish rolling during hot-rolling in a ferrite single-phase region in which a friction coefficient between the steel and a roll is 0.2 or less and a finish rolling temperature is 700°C or higher, and then performing hot-rolled sheet annealing, cold-rolling, and cold-rolled sheet annealing. In this case, since a thickness of the hot-rolled sheet should be controlled to 1.0mm or less, productivity may decrease, making commercial production difficult.

Patent Document 2 proposes a method for controlling a heating speed in final-annealing to 50°C/s or more, in order to secure excellent magnetism by improving a texture of non-oriented electrical steel sheets, but does not take into account the fact that even if a texture is improved by performing rapid heating, magnetism is inferior due to a microstructure becoming uneven.

In addition, Patent Document 3 performed a process of performing skin pass rolling with a reduction ratio of 3 to 10%, and performing annealing again, in addition to processes of hot-rolling, hot-rolled sheet annealing, cold-rolling, and cold-rolled sheet annealing, in order to manufacture non-oriented electrical steel sheets with excellent magnetic properties in rolling direction, but also has a problem of increased raw material cost due to an additional process.

Patent Document 4 suggested a method for obtaining a steel sheet with low iron loss by reducing specific impurity elements contained in steel to a very low level and securing ease of grain growth by adding a skin pass process, but there may be a disadvantage in that an increase in raw material costs due to extremely low impurity management.

Patent Document 5 suggested a technology for achieving excellent iron loss by suppressing precipitation of MnS by adding rare earth elements such as Ca, Mg, REM, or the like such that grains are small before stress removal but grow during annealing for stress removal. However, this also has disadvantages of increasing manufacturing raw material costs for adding and controlling additional elements, and making it difficult to secure effects thereof when annealing for stress removal is not performed.

[Prior art literature]

[Patent Documents]

(Patent Document 1) Japanese Patent Publication No. 2009-102739
(Patent Document 2) Japanese Patent Publication No. 2016-199787
(Patent Document 3) Japanese Patent Publication No. 2006-265720
(Patent Document 4) Japanese Patent Publication No. 2008-050686
(Patent Document 5) Korean Patent Publication No. 2001-0100866

Summary of Invention

Technical Problem

The purpose of the present disclosure is to provide a non-oriented electrical steel sheet having excellent high-frequency iron loss characteristics by strictly controlling components of the non-oriented electrical steel sheet and appropriately controlling distribution of a reduction ratio during hot-rolling and MFS of finish rolling to form a predetermined texture.

In addition, the technical problems to be achieved in the present disclosure are not limited to the technical problems mentioned above, and other technical problems not mentioned can be clearly understood by a person having ordinary knowledge in the technical field to which the present disclosure belongs from the description below.

Solution to Problem

Therefore, an aspect of the present disclosure relates to a non-oriented electrical steel sheet including:

by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities, wherein Al, Si, and Mn satisfy the following Relationship 1, and

a texture of the steel sheet is formed to satisfy the following Relationship 3:

$$[\text{Relationship 1}]$$

$$0.60 \leq ([\text{Al}]+[\text{Mn}])/[\text{Si}] \leq 1.00$$

Where [Al], [Mn], and [Si] are addition amounts (wt%) of Al, Mn, and Si, respectively.

[Relationship 3]

$$(2*Vcube.15+Vrotated\text{-}cube.15)/Vgamma.15 \geq 0.40$$

Where Vcube.15, Vrotated-cube.15, and Vgamma.15 are a volume fraction of a (001)[0-10] texture, a volume fraction of a (001)[-1-10] texture, and a volume fraction of a (111)[-1-12] texture, respectively, when a tolerance angle is 15°.

The texture of the steel sheet may further satisfy the following Relationship 4:

[Relationship 4]

$$(Vcube.15-Vcube.10)/Vcube.15 \leq 0.90$$

Where Vcube.15 is a volume fraction of the (001)[0-10] texture when a tolerance angle is 15°, and Vcube.10 is a volume fraction of the (001) [0-10] texture when a tolerance angle is 10°.

The texture of the steel sheet may further satisfy the following Relationship 5:

[Relationship 5]

$$(Vgamma.15-Vgamma.10)/Vgamma.15 \geq 0.50$$

Where Vgamma.15 is a volume fraction of the (111) [-1-12] texture when a tolerance angle is 15°, and Vgamma.10 is a volume fraction of the (111)[-1-12] texture when a tolerance angle is 10°.

In the present disclosure, the non-oriented electrical steel sheet may have a resistivity ($\rho$) of 63 $\mu\Omega$cm or more at room temperature.

In addition, the non-oriented electrical steel sheet may have iron loss (W10/400) of 12.0 W/Kg or less and a magnetic flux density (B50) of 1.60 T or more.

In this case, the iron loss W10/40 is an average loss (W/Kg) in a rolling direction and a direction, perpendicular to the rolling direction, when a magnetic flux density of 1.0 Tesla is induced at a frequency of 400 Hz, and the magnetic flux density B50 is a magnitude (Tesla) of the magnetic flux density induced when a magnetic field of 5000 A/m is applied.

In addition, the non-oriented electrical steel sheet may further include one or more of Sn and Sb in a range of 0.2% or less.

In addition, the non-oriented electrical steel sheet may further include Cu and Ni alone or in combination of two kinds in a range of 0.05% or less.

In addition, the non-oriented electrical steel sheet may further include Cr in a range of 0.1% or less.

In addition, the non-oriented electrical steel sheet may further include Zr, Mo, and V alone or in combination of two or more thereof in a range of 0.01% or less.

In addition, another aspect of the present disclosure relates to a method for manufacturing a non-oriented electrical steel sheet, including:

reheating a slab containing, by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities; hot-rolling the reheated slab to manufacture a hot-rolled steel sheet; cold-rolling and then annealing the hot-rolled steel sheet, or annealing the hot-rolled steel sheet without cold-rolling; pickling and then air-cooling the annealed hot-rolled steel sheet; cold-rolling the air-cooled hot-rolled steel sheet; and final-annealing the cold-rolled steel sheet,

wherein Al, Si, and Mn satisfy the following Relationship 1, and
during the hot-rolling, the hot-rolling is performed at a temperature of 950°C or higher and at a total reduction ratio of 80% or higher, and tension in the hot-rolled steel sheet is controlled to satisfy requirements of the following Relationship 2 in a last stage of finish rolling:

[Relationship 1]

$$0.60 \leq ([Al]+[Mn])/[Si] \leq 1.00$$

Where [Al], [Mn], and [Si] are addition amounts (wt%) of Al, Mn, and Si, respectively.

20.0 ≤ MFS (kgf/mm2) in a last stage of finish hot- rolling ≤ 40.0 [Relationship 2]

In the present disclosure, a texture of the final-annealed electrical steel sheet may be formed to satisfy the following Relationship 3, and a resistivity ($\rho$) at room temperature may be 63 $\mu\Omega$cm or more, iron loss (W10/400) after the final-annealing may be 12.0 W/Kg or less, and a magnetic flux density (B50) may be 1.60 T or more.

[Relationship 3]

$$(2*Vcube.15+Vrotated-cube.15)/Vgamma.15 \geq 0.40$$

[Relationship 4]

$$(Vcube.15-Vcube.10)/Vcube.15 \leq 0.9$$

[Relationship 5]

$$(Vgamma.15-Vgamma.10)/Vgamma.15 \geq 0.5$$

Where Vcube.15, Vrotated-cube.15, and Vgamma.15 are a volume fraction of a (001) [0-10] texture, a volume fraction of a (001) [-1-10] texture, and a volume fraction of a (111) [-1-12] texture, respectively, when a tolerance angle is 15°, and Vcube.10 and and Vgamma.10 are a volume fraction of the (001) [0-10] texture and a volume fraction of the (111) [-1-12] texture, respectively, when a tolerance angle is 10°.

Advantageous Effects of Invention

According to an aspect of the present disclosure, by controlling composition of steel and appropriately controlling distribution of a reduction ratio during hot-rolling and MFS of finish rolling to improve a texture, it is possible to effectively provide a non-oriented electrical steel sheet having excellent magnetism, having a resistivity ($\rho$) at room temperature of 63 $\mu\Omega$cm or more, an iron loss (W10/400) of 12.0 W/Kg or less after final-annealing, and a magnetic flux density (B50) of 1.60 T or more.

Best Mode for Invention

Hereinafter, the present disclosure will be described.
The present disclosure proposes a method for manufacturing a non-oriented electrical steel sheet, in which essential components, Si, Mn, and Al, in which amounts thereof to be added are 2.5 to 4.5%, 0.1 to 2.5%, and 0.5 to 2.5%, respectively, are added in a composition system of an existing non-oriented electrical steel sheet, and a composition system in which Al, Mn, and Si satisfy the following Relationship 1:

[Relationship 1]

$$0.60 \leq ([Al]+[Mn])/[Si] \leq 1.00$$

In addition, the present disclosure, when a non-oriented electrical steel sheet is manufactured with a slab of the composition system, usual hot-rolling, hot-rolled sheet annealing, cold-rolling, and cold-rolled sheet annealing may be performed. In this case, the present disclosure may be characterized in that, after reheating the slab and performing the hot-rolling, the rolling may be performed at a temperature of 950°C or higher such that a total reduction ratio of the hot-rolling is 80% or higher, and tension in the steel sheet may be controlled such that MFS (kgf/mm$^2$) of the following Relationship 2 is 20.0 to 40.0 in a last stage of finish rolling. Therefore, a texture of a final-annealed product may be formed to satisfy the following Relationship 3, thereby providing an electrical steel sheet having excellent high-frequency iron loss and magnetic flux density, in which iron loss (W10/400) is 12.0 W/Kg or lower and magnetic flux density (B50) is 1.60 T or higher, while a resistivity ($\rho$) at room temperature is 63 $\mu\Omega$cm or higher.

20.0 $\leq$ MFS (kgf/mm2) in a last stage of finish hot- rolling $\leq$ 40.0          [Relationship 2]

```
[Relationship 3]

(2*Vcube.15+Vrotated-cube.15)/Vgamma.15 ≥ 0.40
```

Where Vcube.15, Vrotated-cube.15, and Vgamma.15 are a volume fraction of a (001) [0-10] texture, a volume fraction of a (001) [-1-10] texture, and a volume fraction of a (111) [-1-12] texture, respectively, when a tolerance angle is 15°.

To explain in detail, important elements of which addition amounts and contents should be controlled in the present disclosure may be Si, Al, and Mn, and N and S. The most efficient manner for reducing iron loss may be to increase resistivity of steel by adding Si, Al, and Mn. In particular, in a high-frequency region, effects of increasing a proportion of eddy current loss, in iron loss, increases more, and increasing resistivity may increase. However, as addition amounts of Si, Al, and Mn increases, iron loss may decrease, but saturation magnetic flux density may decrease to deteriorate magnetic flux density, and brittleness of a material may increase to lead to poor cold-rolling properties and lower productivity. Therefore, to secure characteristics of low iron loss and high magnetic flux density while also securing productivity, it is necessary to control the addition amounts of Si, Al, and Mn, as well as to appropriately combine an addition ratio of each of the elements, and thus the above Relationship 1 may be proposed.

Meanwhile, when a texture of a non-oriented electrical steel sheet is improved to facilitate magnetization, iron loss and magnetic flux density may be improved at the same time. Since a decrease in magnetic flux density may be unavoidable as an amount of alloy to be added increases, it is necessary to improve the texture in order to suppress the decrease in magnetic flux density as much as possible and obtain characteristics of high magnetic flux density. Elements such as Al, Mn, or the like may be known to be elements that may improve the texture when added, but an effect thereof may be realized only when process conditions are appropriately controlled such that the texture is improved along with addition of the components. In this respect, the present disclosure may propose the above Relationship 2.

From this point of view, a non-oriented electrical steel sheet of the present disclosure obtained may include, by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities, and Al, Si, and Mn may satisfy the above Relationship 1, and a texture of the steel sheet may be formed to satisfy the above Relationship 3. The electrical steel sheet of the present disclosure having such a texture may exhibit excellent high-frequency iron loss and magnetic flux density, with a resistivity ($\rho$) of 63 $\mu\Omega$cm or more at room temperature, an iron loss (W10/400) of 12.0 W/Kg or less, and a magnetic flux density (B50) of 1.60 T or more.

Hereinafter, composition and content restrictions of the electrical steel sheet of the present disclosure will be described, and "%" herein means wt%.

Si: 2.50 to 4.50%

Si may be a major element added to increase resistivity of steel and reduce eddy current loss in iron loss, and to secure low iron loss characteristics, especially low iron loss in a high-frequency region, it should be added by 2.50% or more. As the amount added increases, magnetic flux density may decrease significantly and rollability may deteriorate due to an increase in brittleness. Therefore, an amount to be added is limited to 4.50% or less. More preferably, it is limited to a range of 3.00 to 4.20%.

Mn: 0.10 to 2.50%

Mn may be an element that increases resistivity and lowers iron loss along with Si, Al, or the like, and may be also an element that improves a texture. However, when an amount to be added is too small, fine sulfides may be formed, and when an amount to be added is excessive, magnetic flux density may decrease significantly. Therefore, an amount to be added is limited to 0.10 to 2.50%. More preferably, it is limited to a range of 0.50 to 2.00%.

Al: 0.50 to 2.50%

Al may be an element that may be added because it plays an important role in reducing iron loss by increasing resistivity together with Si, and also reduces magnetic anisotropy to reduce magnetic deviation in a rolling direction and a direction, perpendicular to the rolling. However, when an amount to be added is small, an effect of reducing iron loss may not be significant, and when an amount to be added is too large, magnetic flux density may be greatly inferior. Therefore, an amount to be added is limited to 0.50 to 2.50%. More preferably, it is limited to a range of 0.60 to 2.30%.

C: 0.0050% or less

C may combine with Ti, Nb, or the like to form carbides, thereby inferior to magnetism, and when processed into an electrical product from a final product and used, iron loss may increase due to magnetic aging, which reduces efficiency of an electrical device. Therefore, an amount to be added is limited to 0.0050% or less.

S: 0.0010 to 0.0050%

S may be an element that forms sulfides such as MnS, CuS, (Cu,Mn)S, or the like, which may be harmful to magnetic properties, so it may be desirable to add as little as possible. However, when it is added below 0.0010%, it may be rather disadvantageous for formation of textures, and formation of fine sulfides may be promoted, which reduces magnetism, so it may be recommended to contain 0.0010% or more, and when it is added above 0.0050%, magnetism may be deteriorated due to an increase in sulfide, so it may be recommended to contain 0.0010 to 0.0050%.

N: 0.0050% or less

N may be an element that may be harmful to magnetism, such as forming nitrides by strongly combining with Al, Ti, Nb, or the like to inhibit grain growth, so it may be desirable to contain less, and in the present disclosure, it is limited to 0.0050% or less.

Ti: 0.0050% or less

Ti may form fine carbides and nitrides by combining with C and N, thereby inhibiting grain growth and lowering magnetic flux density. The more it is added, a texture may be deteriorated due to increases in carbides and nitrides, which worsens magnetism. Therefore, in the present disclosure, it is limited to 0.0050% or less.

P: 0.002 to 0.020%

P may be a grain boundary and surface segregation element that has the effect of improving the texture of steel. However, when an amount to be added is less than 0.002%, an effect thereof may be minimal, and when it is added in excess of 0.020%, it inhibits grain growth, thereby lowering iron loss and lowering rolling properties due to grain boundary segregation, which also reduces productivity. Therefore, an amount to be added should be controlled to 0.002 to 0.020%.

In addition to the above elements, Sn, Sb generally known as elements that improve a texture may also be added for additional magnetic improvement. However, when an amount to be added is too large, it inhibits grain growth and deteriorates magnetism, so in the present disclosure, one or more of Sn and Sb may be additionally included in a range of 0.2% or less.

In addition, in Cu, Ni, although this may be added for reasons such as improving magnetism, this may react with impurity elements to form fine sulfides, carbides, and nitrides, which may have a detrimental effect on magnetism, so in the present disclosure, Cu and Ni may be additionally included alone or in a combination of two types in a range of 0.05% or less.

In Cr, it may be similar to Cu and Ni, but it has an effect of improving magnetism by increasing resistivity, so it may be added in a range of 0.1% or less.

In addition, since Zr, Mo, V, or the like may be a strong carbonitride-forming element, it may not be to be added as possible, and in the present disclosure, Zr, Mo, and V may be included alone or in a combination of two or more types in a range of 0.01% or less.

In addition, a non-oriented electrical steel sheet of the present disclosure may further contain Bi, Pb, Ge, and As in an amount of 0.200 wt% or less, one or more of Bi, Pb, Ge, and As, respectively or in a combined amount. More specifically, one or more or two or more of Bi, Pb, Ge, and As, respectively or in a combined amount may be included in an amount of 0.0001 to 0.200 wt%. More specifically, one or more or two or more of Bi, Pb, Ge, and As, respectively or in a combined amount may be included in an amount of 0.001 to 0.100 wt%.

In addition to the above composition, the remainder may be composed of Fe and other inevitable impurities.

Meanwhile, in the present disclosure, Si, Al, and Mn may be added in amounts of Si: 2.50 to 4.50%, Mn: 0.10 to 2.50%, and Al: 0.50 to 2.05%, and it is necessary for the Al, Mn, and Si to satisfy the following Relationship 1, and the specific reasons for this may be as follows.

$$[\text{Relationship 1}]$$

$$0.60 \leq ([\text{Al}]+[\text{Mn}])/[\text{Si}] \leq 1.00$$

Where [Al], [Mn], and [Si] are addition amounts (wt%) of Al, Mn, and Si, respectively.

Iron loss of the non-oriented electrical steel may be divided into hysteresis loss and eddy current loss, and elements such as Si, Al, Mn, and the like may be added to increase resistivity of steel, which may significantly reduce the eddy current loss. In particular, as a frequency increases, a proportion of total iron loss occupied by the eddy current loss may increase, so it is necessary to control the resistivity of the steel to a certain level or higher in order to obtain excellent high-frequency iron loss. Through the present disclosure, it was confirmed that excellent characteristics may be secured when a resistivity ($\rho$) of the steel is 63 $\mu\Omega$cm or higher. Among Si, Al, and Mn, Si may be an element that increases the resistivity of the steel the most, but an increase in amount of Si added may increase brittleness of the steel, which reduces productivity. Therefore, to secure productivity while making resistivity of the steel 63 $\mu\Omega$cm or higher, an appropriate amount of Al and Mn should be added along with Si, and as a result of examining an appropriate addition ratio, the above Relationship 1 was derived. It may be known that Al has a greater effect of increasing the resistivity of the steel than Mn, but Al does not have to be added in a particularly larger amount than Mn.

In addition, an electrical steel sheet of the present disclosure may have a texture satisfying the following Relationship 3. When a value defined by the following Relationship 3 is less than 0.4, magnetization may not be easy, which may cause a problem of poor magnetism.

$$[\text{Relationship 3}]$$

$$(2*V_{cube.15}+V_{rotated\text{-}cube.15})/V_{gamma.15} \geq 0.40$$

Where Vcube.15, Vrotated-cube.15, and Vgamma.15 are a volume fraction of a (001) [0-10] texture, a volume fraction of a (001) [-1-10] texture, and a volume fraction of a (111) [-1-12] texture, respectively, when a tolerance angle is 15°.

In addition, an electrical steel sheet of the present disclosure may have a texture further satisfying the following Relationship 4. When a value defined by the following Relationship 4 exceeds 0.90, a degree of integration of the texture easy to be magnetized may decrease, resulting in a problem of poor magnetism.

$$[\text{Relationship 4}]$$

$$(V_{cube.15}-V_{cube.10})/V_{cube.15} \leq 0.90$$

Where Vcube.15 is a volume fraction of the (001) [0-10] texture when a tolerance angle is 15°, and Vcube.10 is a volume fraction of the (001) [0-10] texture when a tolerance angle is 10°.

Furthermore, an electrical steel sheet of the present disclosure may have a texture further satisfying the following Relationship 5. When a value defined by the following Relationship 5 is less than 0.50, the texture not easy to be magnetized may be strengthened, which may cause a problem of poor magnetization.

$$[\text{Relationship 5}]$$

$$(V_{gamma.15}-V_{gamma.10})/V_{gamma.15} \geq 0.50$$

Where Vgamma.15 is a volume fraction of the (111) [-1-12] texture when a tolerance angle is 15°, and Vgamma.10 is a volume fraction of the (111)[-1-12] texture when a tolerance angle is 10°.

Generally, a fraction of a texture may be judged based on a tolerance angle of 15°. However, in reality, as a tolerance angle decreases, it may be closer to an original texture, and as a tolerance angle decreases, influence on magnetism may increase. Therefore, it cannot be said that the texture has been improved simply by the fraction at 15°. A (001) [0-10] texture and a (001) [-1-10] texture, which may be advantageous to magnetism, may improve a texture and may enhance magnetism as a fraction having a lower tolerance angle increases, and conversely, a (111) [-1-12] Goss texture, which may be disadvantageous to magnetism, may improve magnetism as a fraction having a low tolerance angle decreases.

In the present disclosure, in addition to a (001) [0-10] texture and a (001) [-1-10] texture, which may be advantageous to magnetism, and a (111) [-1-12] texture, which may be disadvantageous to magnetism, satisfying a condition of the above Relationship 3, preferably, a change in fraction according to a tolerance angle of each texture satisfies conditions of the above Relationships 4 and 5, such that a degree of integration of a texture may be improved and better magnetism may be exhibited.

A non-oriented electrical steel sheet of the present disclosure having the above-described texture may have iron loss (W10/400) of 12.0 W/Kg or less and a magnetic flux density (B50) of 1.60 T or more. In this case, the iron loss W10/40 may be average loss (W/Kg) in a rolling direction and a direction, perpendicular to the rolling, when a magnetic flux density of 1.0 Tesla is induced at a frequency of 400 Hz, and the magnetic flux density B50 is a magnitude (Tesla) of the magnetic flux density induced when a magnetic field of 5000 A/m is applied.

In addition, a non-oriented electrical steel sheet of the present disclosure may have a resistivity ($\rho$) of 63 $\mu\Omega$cm or more at room temperature.

Next, a method for manufacturing a non-oriented electrical steel sheet according to an embodiment of the present disclosure will be described in detail.

The present disclosure relates to a method for manufacturing a non-oriented electrical steel sheet, including reheating a slab containing, by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities; hot-rolling the reheated slab to manufacture a hot-rolled steel sheet; cold-rolling and then annealing the hot-rolled steel sheet, or annealing the hot-rolled steel sheet without cold-rolling; pickling and then air-cooling the annealed hot-rolled steel sheet; cold-rolling the air-cooled hot-rolled steel sheet; and final-annealing the cold-rolled steel sheet, wherein Al, Si, and Mn satisfy the above Relationship 1, and during the hot-rolling, the hot-rolling is performed at a temperature of 950°C or higher and at a total reduction ratio of 80% or higher, and tension in the hot-rolled steel sheet is controlled to satisfy requirements of the above Relationship 2 in a last stage of finish rolling.

That is, a non-oriented electrical steel sheet of the present disclosure may be manufactured by performing a steel slab formed as described above through usual reheating, hot-rolling, hot-rolled sheet annealing, pickling, cold-rolling, and cold-rolled sheet annealing, and in this case, the cold-rolling may be performed once or twice or more with intermediate annealing therebetween. Description of manufacturing conditions below may be a representative implementation, and does not necessarily apply only to conditions below.

First, a steel slab may be reheated to 1200°C or lower and then hot-roll the same. When a reheating temperature is 1200°C or higher, a precipitate such as a nitride, a carbide, a sulfide, or the like, present in the slab, may be redissolved and then finely precipitated during hot-rolling and annealing, which may inhibit grain growth and may reduce magnetism.

Next, in the present disclosure, the reheated slab may be hot-rolled to manufacture a hot-rolled sheet. Since a texture of the non-oriented electrical steel sheet may not be formed independently during final-annealing but may be influenced by a texture of a previous stage, it is necessary to precisely control conditions from a hot-rolling stage in order to improve the texture. When high stress is applied at a low temperature during the hot-rolling, $\alpha$-fibers may increase excessively and after the final-annealing, $\gamma$-fibers, which may be a texture in which magnetization is not easily implemented, may be strengthened, which deteriorates magnetism, so a reduction ratio according to a temperature should be appropriately distributed. That is, when the hot-rolling is performed at a temperature of 950°C or higher after the reheating of the slab and at a rolling reduction rate of 80% or higher of a total reduction rate of the hot-rolling, it was confirmed that the textures of the $\alpha$-fibers and $\gamma$-fibers, which may be textures in which magnetization is not easily implemented in the final product, may be weakened, thereby improving magnetism. Furthermore, when the reduction amount is excessively large during the finish rolling, it was confirmed that the $\gamma$-fiber textures, which may be textures in which magnetization is not easily implemented, may be strengthened after the final-annealing, and by controlling the MFS (kgf/mm$^2$) of the following Relationship 2 to satisfy 20.0 to 40.0, fractions and degrees of integration of a (001) [0-10] texture and a (001) [-1-10] texture, which may be favorable for magnetization in the final product, may be strengthened, and a fraction and a degree of integration of a (111) [-1-12] gamma texture, which may be unfavorable for magnetization, may be reduced, thereby improving magnetism.

$$20.0 \leq \text{MFS (kgf/mm2) in a last stage of finish hot- rolling} \leq 40.0 \qquad \text{[Relationship 2]}$$

When MFS (kgf/mm$^2$) exceeds 40.0 in the last stage of finish rolling, $\gamma$-fibers may be greatly strengthened, and on the contrary, when MFS (kgf/mm$^2$) is less than 20.0, effects of improving the (001) [0-10] texture and the (001) [-1-10] texture, which may be an easy magnetization direction, does not appear. This may be thought to be because the applied strain may be too small to improve the texture. Therefore, when MFS (kgf/mm$^2$) is controlled to satisfy 20.0 to 40.0 in the last stage of finish rolling, textures satisfying the above-described Relationships 3 to 5 may be formed, such that magnetism may be improved.

Next, in the present disclosure, after the hot-rolling, the hot-rolled sheet may be coiled at 700°C or less, and may be cooled in the air. The coiled and cooled hot-rolled sheet may be subjected to hot-rolled sheet annealing to secure a recrystallized structure before cold-rolling. A hot-rolled sheet annealing conditions may be a very important process for improving the texture of non-oriented electrical steel sheets, and may be also a very important process for controlling distribution of precipitates. A soaking temperature in a hot-rolled sheet annealing process may be in a range of 850 to 1100°C. When the hot-rolled sheet annealing temperature is lower than 850°C, grain growth may be insufficient, resulting in inferior texture and uncontrolled distribution of precipitates. When it exceeds 1100°C, grain growth becomes coarser, resulting in inferior cold-rollability, and precipitates may be finely precipitated, which may deteriorate magnetism.

In addition, the present disclosure may cold-roll the annealed hot-rolled sheet after pickling in a conventional manner.

The cold-rolling may be finally rolled to a thickness of 0.10 mm to 0.30 mm. A thickness of the final product may greatly influence iron loss, and since the influence may be considerably large on high-frequency iron loss, it should be 0.3 mmt or less to secure excellent high-frequency iron loss. The above cold-rolling may be performed as one cold-rolling as necessary, or as two cold-rolling processes with intermediate annealing therebetween. In either case, a final reduction ratio should be in a range of 50 to 95% to secure excellent magnetism through appropriate texture controlling.

Subsequently, in the present disclosure, the cold-rolled steel sheet may be finally subjected to cold-rolled sheet annealing. In a process of annealing the cold-rolled sheet, an annealing temperature is not particularly limited as long as it is a temperature that may be usually applied to non-oriented electrical steel sheets.

Iron loss of the non-oriented electrical steel sheets may be closely related to a grain size. The iron loss of the non-oriented electrical steel sheets may be divided into hysteresis loss and eddy current loss. The hysteresis loss may decrease as the grain size increases, while the eddy current loss may increase as the grain size increases. Therefore, there may be an optimal grain size at which a sum of the hysteresis loss and the eddy current loss is minimized. Therefore, it may be important to derive and apply an annealing temperature that may secure an optimal grain size, and the annealing temperature may be 850 to 1100°C. When the annealing temperature is lower than 850°C, the crystal grains may be too fine, which increases the hysteresis loss. When it exceeds 1100°C, the crystal grains may be too coarse, which increases the eddy current loss, which may result in poor iron loss.

The final-annealed sheet may be shipped to a customer after being treated with an insulating film. The insulating film may be treated with an organic film, an inorganic film, or an organic-inorganic composite film, and it is also possible to treat the same with other insulating film agents. The customer may use the steel sheet as it is after processing.

A non-oriented electrical steel sheet of the present disclosure manufactured through the composition and manufacturing process described above may have a texture formed to satisfy the above-mentioned Relationships 3 to 5, thereby providing excellent high-frequency iron loss characteristics with an iron loss (W10/400) of 12.0 W/Kg or less and a magnetic flux density (B50) of 1.60 T or more. In addition, resistivity ($\rho$) at room temperature may be 63 $\mu\Omega$cm or more.

Mode for Invention

Hereinafter, a method for manufacturing a non-oriented electrical steel sheet according to the present disclosure will be described in detail through examples. However, the following examples are merely illustrative of the present disclosure, and contents of the present disclosure may not be limited by the following examples.

(Example)

A steel ingot having a composition as illustrated in Table 1 below was manufactured through vacuum melting. Each of the above-mentioned manufactured ingots was heated at 1180°C and hot-rolled to a thickness of 2.1 mm, and then coiled and cooled in the air. Thereafter, the cooled hot-rolled sheet was hot-rolled steel annealed at 900 to 1050°C. Then, the hot-rolled sheet annealed was pickled, cold-rolled to a thickness of 0.2 mm, and then finally cold-rolled at a temperature in a range of 900 to 1050°C.

As described above, room temperature resistivity of each of the manufactured specimens was measured, and results therefrom were illustrated in Table 2 below. In addition, EBSD specimens were prepared, and a fraction of a texture was measured through EBSD measurement, and results therefrom were also illustrated in Table 2 below. In addition, the measured fraction of the texture was obtained according to Relationships 3 to 5, and results therefrom were also illustrated in Table 2 below.

Also, after processing the magnetic measurement specimens, iron loss W10/400 and magnetic flux density B50 were measured, and results therefrom were also illustrated in Table 2 below. Meanwhile, in this experiment, the iron loss W10/400 represents an average loss (W/Kg) in a rolling direction and a direction, perpendicular to the rolling, when a magnetic flux density of 1.0 Tesla is induced at a frequency of 400 Hz, and the magnetic flux density B50 represents a magnitude (Tesla) of the magnetic flux density induced, when a magnetic field of 5000 A/m is applied.

[Table 1]

| Steel Type | Composition (wt%) | | | | | | | | Relationship 1 |
|---|---|---|---|---|---|---|---|---|---|
| | C | Si | Mn | P | S | Al | Ti | N | |
| 1 | 0.0015 | 4.18 | 1.83 | 0.012 | 0.0037 | 1.50 | 0.0025 | 0.0006 | 0.80 |
| 2 | 0.0018 | 2.94 | 0.75 | 0.002 | 0.0034 | 1.30 | 0.0010 | 0.0018 | 0.70 |
| 3 | 0.0039 | 3.63 | 2.10 | 0.004 | 0.0011 | 1.20 | 0.0045 | 0.0036 | 0.91 |
| 4 | 0.0014 | 3.07 | 0.71 | 0.004 | 0.0017 | 2.16 | 0.0029 | 0.0031 | 0.93 |
| 5 | 0.0023 | 2.87 | 1.72 | 0.014 | 0.0040 | 1.13 | 0.0034 | 0.0018 | 0.99 |
| 6 | 0.0038 | 4.20 | 1.58 | 0.004 | 0.0027 | 1.29 | 0.0038 | 0.0020 | 0.68 |
| 7 | 0.0039 | 3.64 | 1.76 | 0.003 | 0.0039 | 1.74 | 0.0020 | 0.0023 | 0.96 |
| 8 | 0.0022 | 4.00 | 1.04 | 0.010 | 0.0011 | 1.86 | 0.0041 | 0.0038 | 0.73 |
| 9 | 0.0031 | 3.30 | 0.52 | 0.008 | 0.0042 | 2.01 | 0.0026 | 0.0036 | 0.77 |
| 10 | 0.0040 | 3.14 | 1.01 | 0.004 | 0.0043 | 1.02 | 0.0010 | 0.0020 | 0.66 |
| 11 | 0.0020 | 3.58 | 0.74 | 0.004 | 0.0032 | 2.19 | 0.0037 | 0.0016 | 0.82 |
| 12 | 0.0027 | 3.68 | 0.61 | 0.008 | 0.0027 | 2.35 | 0.0037 | 0.0031 | 0.80 |
| 13 | 0.0016 | 3.31 | 2.09 | 0.011 | 0.0035 | 1.10 | 0.0037 | 0.0019 | 0.96 |
| 14 | 0.0014 | 3.04 | 1.32 | 0.014 | 0.0040 | 1.57 | 0.0027 | 0.0012 | 0.95 |
| 15 | 0.0027 | 3.38 | 0.78 | 0.010 | 0.0045 | 1.94 | 0.0010 | 0.0037 | 0.80 |
| 16 | 0.0030 | 2.45 | 1.52 | 0.005 | 0.0023 | 1.24 | 0.0010 | 0.0043 | 1.13 |
| 17 | 0.0016 | 3.02 | 0.08 | 0.014 | 0.0038 | 1.52 | 0.0024 | 0.0040 | 0.53 |
| 18 | 0.0034 | 3.63 | 1.37 | 0.014 | 0.0032 | 2.36 | 0.0041 | 0.0021 | 1.03 |
| 19 | 0.0023 | 2.97 | 2.60 | 0.007 | 0.0042 | 0.42 | 0.0017 | 0.0043 | 1.02 |
| 20 | 0.0030 | 3.31 | 0.81 | 0.015 | 0.0032 | 0.60 | 0.0038 | 0.0026 | 0.43 |
| 21 | 0.0019 | 3.57 | 0.32 | 0.011 | 0.0039 | 2.15 | 0.0013 | 0.0021 | 0.69 |
| 22 | 0.0019 | 3.56 | 0.69 | 0.003 | 0.0020 | 2.29 | 0.0022 | 0.0044 | 0.84 |
| 23 | 0.0021 | 2.97 | 1.03 | 0.006 | 0.0044 | 0.79 | 0.0025 | 0.0019 | 0.61 |
| 24 | 0.0025 | 3.23 | 0.95 | 0.005 | 0.0032 | 1.62 | 0.0014 | 0.0011 | 0.80 |
| 25 | 0.0015 | 2.77 | 1.74 | 0.013 | 0.0044 | 1.37 | 0.0044 | 0.0010 | 1.12 |
| 26 | 0.0038 | 3.81 | 0.20 | 0.012 | 0.0045 | 2.26 | 0.0045 | 0.0026 | 0.65 |
| 27 | 0.0031 | 3.97 | 1.29 | 0.011 | 0.0033 | 1.84 | 0.0042 | 0.0024 | 0.79 |
| 28 | 0.0039 | 2.79 | 0.95 | 0.012 | 0.0020 | 1.97 | 0.0044 | 0.0045 | 1.05 |
| 29 | 0.0043 | 3.23 | 1.72 | 0.004 | 0.0039 | 2.08 | 0.0014 | 0.0035 | 1.18 |
| 30 | 0.0031 | 2.84 | 1.11 | 0.007 | 0.0042 | 1.79 | 0.0024 | 0.0023 | 1.02 |
| * In Table 1, residual components were Fe and inevitable impurities, and Relationship 1 is ([Al]+[Mn])/[Si]. | | | | | | | | | |

[Table 2]

| Steel Type | Hot-Rolled Conditions | | Vcube.15(%) | Vrotated-cube.15 | Vgamma.15 | Vcube.10 | Vgamma.10 | Relationship 3 | Relationship 4 | Relationship 5 | Resistivity (μΩcm) | W10-400 (W/Kg) | B50(T) | Example |
|---|---|---|---|---|---|---|---|---|---|---|---|---|---|---|
| | Reduction Ratio (%) | MFS (kgf/mm²) | | | | | | | | | | | | |
| 1 | 89.9 | 30.1 | 0.023 | 0.025 | 0.151 | 0.0035 | 0.059 | 0.47 | 0.85 | 0.61 | 87.8 | 8.4 | 1.62 | Inventive |
| 2 | 88.4 | 21.0 | 0.015 | 0.018 | 0.113 | 0.0041 | 0.046 | 0.42 | 0.73 | 0.59 | 65.4 | 10.2 | 1.64 | Inventive |
| 3 | 93.2 | 30.4 | 0.022 | 0.029 | 0.165 | 0.0046 | 0.037 | 0.44 | 0.79 | 0.78 | 79.7 | 9.2 | 1.63 | Inventive |
| 4 | 88.9 | 37.0 | 0.025 | 0.016 | 0.164 | 0.0040 | 0.041 | 0.40 | 0.84 | 0.75 | 76.4 | 9.9 | 1.53 | Inventive |
| 5 | 90.4 | 23.1 | 0.030 | 0.018 | 0.135 | 0.0031 | 0.048 | 0.58 | 0.90 | 0.64 | 68.2 | 9.8 | 1.62 | Inventive |
| 6 | 84.8 | 31.0 | 0.022 | 0.022 | 0.152 | 0.0027 | 0.040 | 0.43 | 0.88 | 0.74 | 84.2 | 9.4 | 1.63 | Inventive |
| 7 | 81.6 | 37.7 | 0.029 | 0.025 | 0.159 | 0.0050 | 0.043 | 0.52 | 0.83 | 0.73 | 84.0 | 8.9 | 1.62 | Inventive |
| 8 | 82.1 | 21.0 | 0.028 | 0.013 | 0.091 | 0.0045 | 0.030 | 0.76 | 0.84 | 0.67 | 85.3 | 9.1 | 1.63 | Inventive |
| 9 | 91.7 | 39.4 | 0.022 | 0.024 | 0.119 | 0.0034 | 0.044 | 0.57 | 0.85 | 0.63 | 76.2 | 9.5 | 1.64 | Inventive |
| 10 | 87.8 | 31.0 | 0.022 | 0.023 | 0.153 | 0.0025 | 0.036 | 0.44 | 0.89 | 0.76 | 66.1 | 10.4 | 1.64 | Inventive |
| 11 | 81.8 | 20.6 | 0.015 | 0.023 | 0.088 | 0.0021 | 0.043 | 0.60 | 0.86 | 0.51 | 82.6 | 8.5 | 1.62 | Inventive |
| 12 | 84.7 | 29.5 | 0.035 | 0.017 | 0.137 | 0.0044 | 0.047 | 0.64 | 0.87 | 0.66 | 84.8 | 8.1 | 1.62 | Inventive |
| 13 | 88.8 | 39.6 | 0.029 | 0.025 | 0.194 | 0.0041 | 0.032 | 0.43 | 0.86 | 0.84 | 74.9 | 9.9 | 1.63 | Inventive |
| 14 | 82.3 | 31.1 | 0.031 | 0.030 | 0.167 | 0.0038 | 0.044 | 0.55 | 0.88 | 0.74 | 72.8 | 10.2 | 1.64 | Inventive |
| 15 | 88.9 | 25.5 | 0.027 | 0.022 | 0.108 | 0.0037 | 0.044 | 0.70 | 0.86 | 0.59 | 77.8 | 9.2 | 1.63 | Inventive |
| 16 | 88.4 | 21.4 | 0.023 | 0.021 | 0.152 | 0.0021 | 0.051 | 0.44 | 0.91 | 0.66 | 63.5 | 12.1 | 1.57 | Comparative |
| 17 | 80.8 | 25.2 | 0.020 | 0.019 | 0.182 | 0.0017 | 0.095 | 0.32 | 0.92 | 0.48 | 65.0 | 12.6 | 1.59 | Comparative |
| 18 | 82.0 | 35.5 | 0.028 | 0.013 | 0.154 | 0.0023 | 0.089 | 0.45 | 0.92 | 0.42 | 88.7 | 12.9 | 1.59 | Comparative |
| 19 | 81.7 | 25.5 | 0.013 | 0.023 | 0.147 | 0.0008 | 0.076 | 0.33 | 0.94 | 0.48 | 66.2 | 13.2 | 1.57 | Comparative |
| 20 | 80.5 | 31.1 | 0.025 | 0.013 | 0.189 | 0.0038 | 0.034 | 0.33 | 0.85 | 0.82 | 62.0 | 12.5 | 1.57 | Comparative |
| 21 | 79.7 | 27.6 | 0.024 | 0.015 | 0.195 | 0.0028 | 0.108 | 0.32 | 0.88 | 0.45 | 79.7 | 12.7 | 1.58 | Comparative |
| 22 | 85.6 | 17.2 | 0.024 | 0.027 | 0.178 | 0.0012 | 0.098 | 0.42 | 0.95 | 0.45 | 83.3 | 13.4 | 1.57 | Comparative |
| 23 | 74.7 | 13.5 | 0.024 | 0.024 | 0.197 | 0.0036 | 0.104 | 0.37 | 0.85 | 0.47 | 61.6 | 13.0 | 1.57 | Comparative |
| 24 | 72.7 | 26.7 | 0.011 | 0.014 | 0.148 | 0.0008 | 0.042 | 0.24 | 0.93 | 0.72 | 73.4 | 13.0 | 1.58 | Comparative |
| 25 | 82.3 | 44.2 | 0.013 | 0.012 | 0.121 | 0.0011 | 0.065 | 0.31 | 0.92 | 0.46 | 69.9 | 12.7 | 1.58 | Comparative |

(continued)

| Steel Type | Hot-Rolled Conditions | | Vcube .15(%) | Vrotat ed-cube. 1 5 | Vgamm a.15 | Vcube. 10 | Vgamma .10 | Relat ionsh ip 3 | Relat ionsh ip 4 | Relat ionsh ip 5 | Resist ivity( $\mu\Omega$cm) | W10-400(W /Kg) | B50(T) | Example |
|---|---|---|---|---|---|---|---|---|---|---|---|---|---|---|
| | Reduction Ratio (%) | MFS (kgf/mm$^2$) | | | | | | | | | | | | |
| 26 | 64.5 | 10.0 | 0.013 | 0.017 | 0.168 | 0.0027 | 0.090 | 0.26 | 0.79 | 0.46 | 83.0 | 12.5 | 1.59 | Comparative |
| 27 | 69.7 | 18.5 | 0.014 | 0.011 | 0.230 | 0.0012 | 0.052 | 0.17 | 0.91 | 0.77 | 86.2 | 13.2 | 1.59 | Comparative |
| 28 | 82.5 | 47.7 | 0.019 | 0.015 | 0.222 | 0.0015 | 0.115 | 0.24 | 0.92 | 0.48 | 72.4 | 12.6 | 1.58 | Comparative |
| 29 | 77.8 | 17.2 | 0.025 | 0.019 | 0.201 | 0.0017 | 0.111 | 0.34 | 0.93 | 0.45 | 83.0 | 13.4 | 1.59 | Comparative |
| 30 | 69.7 | 14.1 | 0.026 | 0.016 | 0.157 | 0.0022 | 0.098 | 0.43 | 0.92 | 0.38 | 71.8 | 12.8 | 1.58 | Comparative |

* In Table 2, MFS means MFS at a last stage of finish hot-rolling of Relationship 2, Relationship 3 means (2*Vcube.15+Vrotated-cube.15)/Vgamma.15, Relationship 4 means (Vcube.15-Vcube.10)/Vcube.15, and Relationship 5 means (Vgamma.15-Vgamma.10)/Vgamma.15.

As illustrated in Tables 1 and 2 above, steels No. 1 to 15 (Inventive Examples) that satisfy electrical steel sheet composition and manufacturing process conditions of the present disclosure had formed textures that satisfy all the requirements of Relationships 3 to 5, and thus exhibited excellent magnetism after a final-annealing in that iron loss (W10/400) is 12.0 W/Kg or less and a magnetic flux density (B50) is 1.60 T or more. In addition, resistivity at room temperature was 63 μΩcm or more.

In contrast, steel No. 16 was a case in which an Si addition amount and Relationship 1 were outside the scope of the present disclosure, and did not satisfy the requirements of Relationship 4, so W10/400 and magnetic flux density B50 were inferior.

In addition, steel No. 17 did not satisfy the scope of the present disclosure in terms of Mn and Relationship 1, and thus did not satisfy all of the requirements of Relationships 3 to 5, resulting in inferior iron loss W10/400 and magnetic flux density B50.

In addition, steel No. 18 was a case in which an amount of Al added and Relationship 1 were outside the scope of the present disclosure, and thus did not satisfy all of the requirements of Relationships 4 and 5, resulting in inferior iron loss W10/400 and magnetic flux density B50.

In addition, steel No. 19 was a case in which not only amounts of Mn and Al added but also Relationship 1 were outside the scope of the present disclosure, and thus did not satisfy all of the requirements of Relationships 3 to 5, resulting in inferior iron loss W10/400 and magnetic flux density B50.

In addition, steel No. 20 was a case in which Relationship 1 did not satisfy the scope of the present disclosure, and thus did not satisfy the requirements of Relationship 3, resulting in inferior iron loss W10/400 and magnetic flux density B50. In addition, the resistivity at room temperature was less than 63 μΩcm.

Steel No. 21 had a composition and Relationship 1 within the scope of the present disclosure, but the total reduction ratio at 950°C or higher during hot-rolling was less than 80%, so it did not satisfy the requirements of Relationships 3 and 4, resulting in inferior iron loss W10/400 and magnetic flux density B50.

Steel No. 22 had a composition and Relationship 1 within the scope of the present disclosure, but the MFS (kgf/mm2) at the last stage of finish hot-rolling in Relationship 2 were outside the scope of the present disclosure, and thus did not satisfy Relationships 4 and 5, resulting in inferior iron loss W10/400 and magnetic flux density B50.

Steel No. 23 had a composition and Relationship 1 within the scope of the present disclosure, but the total reduction ratio at 950°C or higher during hot-rolling and the MFS of Relationship 2 were outside the scope of the present disclosure, and Relationships 3 and 5 were not satisfied, resulting in inferior iron loss W10/400 and magnetic flux density B50. In addition, the resistivity at room temperature was less than 63 μΩcm.

Steel No. 24 had an Al content and a total reduction ratio during hot-rolling outside the scope of the present disclosure, and did not satisfy the requirements of Relationships 3 and 4, resulting in inferior iron loss W10/400 and magnetic flux density B50.

Steel No. 25 not only did not satisfy the Mn content and Relationship 1, but also the MFS of Relationship 2 were outside the scope of the present disclosure, and did not satisfy all the requirements of Relationships 3 to 5, resulting in inferior iron loss W10/400 and magnetic flux density B50.

Steel No. 26 had a composition and Relationship 1 within the scope of the present disclosure, but the total reduction ratio during hot-rolling and the MFS of Relationship 2 were outside the scope of the present disclosure, and thus the requirements of Relationships 3 and 5 were not satisfied, resulting in inferior iron loss W10/400 and magnetic flux density B50.

Steel No. 27 not only had the Mn and Al contents outside the scope of the present disclosure, but also the total reduction ratio during hot-rolling and the MFS of Relationship 2 were outside the scope of the present disclosure, and thus the requirements of Relationships 3 and 4 were not satisfied, resulting in inferior iron loss W10/400 and magnetic flux density B50.

Steel No. 28 not only had Mn, Al content and Relationship 1 outside the scope of the present disclosure, but also had MFS of Relationship 2 during hot-rolling outside the scope of the present disclosure, and thus did not satisfy all the requirements of Relationships 3 to 5, resulting in inferior iron loss W10/400 and magnetic flux density B50.

Steel No. 29 not only had Mn, Al content and Relationship 1 outside the scope of the present disclosure, but also had total reduction ratio during hot-rolling and MFS of Relationship 2 outside the scope of the present disclosure, and thus did not satisfy all the requirements of Relationships 3 to 5, resulting in inferior iron loss W10/400 and magnetic flux density B50.

Meanwhile, steel No. 30 had a composition Relationship 1 that were outside the scope of the present disclosure, and the total reduction ratio during hot-rolling and the MFS of Relationship 2 were outside the scope of the present disclosure, such that the requirements of Relationships 4 and 5 were not satisfied, resulting in inferior iron loss W10/400 and magnetic flux density B50.

Although the above has been described with reference to the embodiments, it can be to be understood that those skilled in the art may modify and change the present disclosure in various ways within the scope of the basic idea of the present disclosure, and that the scope of the rights of the present disclosure should be interpreted based on the scope of the claims.

**Claims**

1. A non-oriented electrical steel sheet comprising:

   by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities,
   wherein Al, Si, and Mn satisfy the following Relationship 1, and
   a texture of the steel sheet is formed to satisfy the following Relationship 3:

   [Relationship 1]

   $$0.60 \leq ([Al]+[Mn])/[Si] \leq 1.00$$

   where [Al], [Mn], and [Si] are addition amounts (wt%) of Al, Mn, and Si, respectively,

   [Relationship 3]

   $$(2*Vcube.15+Vrotated\text{-}cube.15)/Vgamma.15 \geq 0.40$$

   where Vcube.15, Vrotated-cube.15, and Vgamma.15 are a volume fraction of a (001)[0-10] texture, a volume fraction of a (001)[-1-10] texture, and a volume fraction of a (111)[-1-12] texture, respectively, when a tolerance angle is 15°.

2. The non-oriented electrical steel sheet of claim 1, wherein the texture of the steel sheet further satisfies the following Relationship 4:

   [Relationship 4]

   $$(Vcube.15-Vcube.10)/Vcube.15 \leq 0.90$$

   where Vcube.15 is a volume fraction of the (001) [0-10] texture when a tolerance angle is 15°, and Vcube.10 is a volume fraction of the (001) [0-10] texture when a tolerance angle is 10°.

3. The non-oriented electrical steel sheet of claim 1 or 2, wherein the texture of the steel sheet further satisfies the following Relationship 5:

   [Relationship 5]

   $$(Vgamma.15-Vgamma.10)/Vgamma.15 \geq 0.50$$

   where Vgamma.15 is a volume fraction of the (111) [-1-12] texture when a tolerance angle is 15°, and Vgamma.10 is a volume fraction of the (111) [-1-12] texture when a tolerance angle is 10°.

4. The non-oriented electrical steel sheet of claim 1, having a resistivity ($\rho$) of 63 $\mu\Omega$cm or more at room temperature.

5. The non-oriented electrical steel sheet of claim 1, having iron loss (W10/400) of 12.0 W/Kg or less and a magnetic flux density (B50) of 1.60 T or more, if the iron loss W10/40 is an average loss (W/Kg) in a rolling direction and a direction, perpendicular to the rolling direction, when a magnetic flux density of 1.0 Tesla is induced at a frequency of 400 Hz, and the magnetic flux density B50 is a magnitude (Tesla) of the magnetic flux density induced when a magnetic field of 5000 A/m is applied.

6.  The non-oriented electrical steel sheet of claim 1, further including one or more of Sn and Sb in a range of 0.2% or less.

7.  The non-oriented electrical steel sheet of claim 1, further including Cu and Ni alone or in combination of two kinds in a range of 0.05% or less.

8.  The non-oriented electrical steel sheet of claim 1, further including Cr in a range of 0.1% or less.

9.  The non-oriented electrical steel sheet of claim 1, further including Zr, Mo, and V alone or in combination of two or more thereof in a range of 0.01% or less.

10. A method for manufacturing a non-oriented electrical steel sheet, comprising:

    reheating a slab containing, by weight, C: 0.0050% or less, Si: 2.50 to 4.50%, Mn: 0.10 to 2.50%, P: 0.002 to 0.020%, S: 0.0010 to 0.0050%, Al: 0.50 to 2.50%, N: 0.0050% or less, Ti: 0.0050% or less, with a balance of Fe and inevitable impurities;
    hot-rolling the reheated slab to manufacture a hot-rolled steel sheet;
    cold-rolling and then annealing the hot-rolled steel sheet, or annealing the hot-rolled steel sheet without cold-rolling;
    pickling and then air-cooling the annealed hot-rolled steel sheet;
    cold-rolling the air-cooled hot-rolled steel sheet; and
    final-annealing the cold-rolled steel sheet,
    wherein Al, Si, and Mn satisfy the following Relationship 1, and
    during the hot-rolling, the hot-rolling is performed at a temperature of 950°C or higher and at a total reduction ratio of 80% or higher, and tension in the hot-rolled steel sheet is controlled to satisfy requirements of the following Relationship 2 in a last stage of finish rolling:

    [Relationship 1]

$$0.60 \leq ([Al]+[Mn])/[Si] \leq 1.00$$

    where [Al], [Mn], and [Si] are addition amounts (wt%) of Al, Mn, and Si, respectively.

    $20.0 \leq$ MFS (kgf/mm2) in a last stage of finish hot-rolling $\leq 40.0$                         [Relationship 2]

11. The method of claim 10, wherein a texture of the final-annealed electrical steel sheet is formed to satisfy the following Relationship 3, and a resistivity ($\rho$) at room temperature is 63 $\mu\Omega$cm or more, iron loss (W10/400) after the final-annealing is 12.0 W/Kg or less, and a magnetic flux density (B50) is 1.60 T or more,

    [Relationship 3]

$$(2*Vcube.15+Vrotated-cube.15)/Vgamma.15 \geq 0.40$$

    where Vcube.15, Vrotated-cube.15, and Vgamma.15 are a volume fraction of a (001) [0-10] texture, a volume fraction of a (001) [-1-10] texture, and a volume fraction of a (111) [-1-12] texture, respectively, when a tolerance angle is 15°.

12. The method of claim 10, wherein a texture of the final-annealed electrical steel sheet further satisfies the following Relationship 4:

[Relationship 4]

(Vcube.15-Vcube.10)/Vcube.15 ≤ 0.90

where Vcube.15 is a volume fraction of the (001) [0-10] texture when a tolerance angle is 15°, and Vcube.10 is a volume fraction of the (001) [0-10] texture when a tolerance angle is 10°.

**13.** The method of claim 11 or 12, wherein the texture of the final-annealed electrical steel sheet further satisfies the following Relationship 5:

[Relationship 5]

(Vgamma.15-Vgamma.10)/Vgamma.15 ≥ 0.50

where Vgamma.15 is a volume fraction of the (111)[-1-12] texture when a tolerance angle is 15°, and Vgamma.10 is a volume fraction of the (111)[-1-12] texture when a tolerance angle is 10°.

## INTERNATIONAL SEARCH REPORT

| | International application No. |
|---|---|
| | **PCT/KR2023/019129** |

### A. CLASSIFICATION OF SUBJECT MATTER

**C22C 38/02**(2006.01)i; **C22C 38/04**(2006.01)i; **C22C 38/06**(2006.01)i; **C22C 38/00**(2006.01)i; **C22C 38/14**(2006.01)i; **C22C 38/16**(2006.01)i; **C22C 38/08**(2006.01)i; **C22C 38/12**(2006.01)i; **C21D 8/12**(2006.01)i

According to International Patent Classification (IPC) or to both national classification and IPC

### B. FIELDS SEARCHED

Minimum documentation searched (classification system followed by classification symbols)

C22C 38/02(2006.01); B21B 3/00(2006.01); C21D 8/12(2006.01); C22C 38/00(2006.01); H01F 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성 전기(전자)강판(non-oriented electrical(electromagnetic) steel), 실리콘 (Si), 알루미늄(Al), 망간(Mn), 열간압연(hot-rolling), 평균변형저항(MFS(mean flow stress))

### C. DOCUMENTS CONSIDERED TO BE RELEVANT

| Category* | Citation of document, with indication, where appropriate, of the relevant passages | Relevant to claim No. |
|---|---|---|
| A | KR 10-1130725 B1 (POSCO) 28 March 2012 (2012-03-28)<br>See paragraph [0043] and claims 1, 3-4 and 6. | 1-13 |
| A | KR 10-2328127 B1 (POSCO) 17 November 2021 (2021-11-17)<br>See paragraph [0219] and claims 1 and 12. | 1-13 |
| A | KR 10-2016-0078134 A (POSCO) 04 July 2016 (2016-07-04)<br>See claims 1 and 5. | 1-13 |
| A | JP 2015-212403 A (JFE STEEL CORP.) 26 November 2015 (2015-11-26)<br>See claim 1. | 1-13 |
| A | JP 2000-297325 A (NIPPON STEEL CORP.) 24 October 2000 (2000-10-24)<br>See claim 1. | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 February 2024** | **23 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 640 873 A1**

## INTERNATIONAL SEARCH REPORT
### Information on patent family members

| International application No. |
| --- |
| **PCT/KR2023/019129** |

| Patent document cited in search report | | | Publication date (day/month/year) | Patent family member(s) | | | Publication date (day/month/year) |
| --- | --- | --- | --- | --- | --- | --- | --- |
| KR | 10-1130725 | B1 | 28 March 2012 | CN | 100529115 | C | 19 August 2009 |
| | | | | CN | 101084322 | A | 05 December 2007 |
| | | | | EP | 1838882 | A1 | 03 October 2007 |
| | | | | JP | 2008-524449 | A | 10 July 2008 |
| | | | | JP | 4804478 | B2 | 02 November 2011 |
| | | | | KR | 10-0721818 | B1 | 28 May 2007 |
| | | | | KR | 10-0721864 | B1 | 28 May 2007 |
| | | | | KR | 10-0721865 | B1 | 28 May 2007 |
| | | | | KR | 10-0721926 | B1 | 28 May 2007 |
| | | | | US | 2008-0121314 | A1 | 29 May 2008 |
| | | | | US | 7846271 | B2 | 07 December 2010 |
| | | | | WO | 2006-068399 | A1 | 29 June 2006 |
| KR | 10-2328127 | B1 | 17 November 2021 | CN | 113195766 | A | 30 July 2021 |
| | | | | CN | 113195766 | B | 21 November 2023 |
| | | | | EP | 3940104 | A2 | 19 January 2022 |
| | | | | JP | 2022-514793 | A | 15 February 2022 |
| | | | | KR | 10-2020-0076831 | A | 30 June 2020 |
| | | | | KR | 10-2241985 | B1 | 19 April 2021 |
| | | | | US | 2022-0056550 | A1 | 24 February 2022 |
| | | | | WO | 2020-130644 | A2 | 25 June 2020 |
| | | | | WO | 2020-130644 | A3 | 24 September 2020 |
| KR | 10-2016-0078134 | A | 04 July 2016 | None | | | |
| JP | 2015-212403 | A | 26 November 2015 | JP | 6146582 | B2 | 14 June 2017 |
| JP | 2000-297325 | A | 24 October 2000 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009102739 A
- JP 2016199787 A
- JP 2006265720 A
- JP 2008050686 A
- KR 20010100866